(19) Europäisches Patentamt
European Patent Office
Office européen des brevets

(11) EP 4 432 448 A1

(12) EUROPEAN PATENT APPLICATION
published in accordance with Art. 153(4) EPC

(43) Date of publication:
**18.09.2024 Bulletin 2024/38**

(21) Application number: **23883010.3**

(22) Date of filing: **20.10.2023**

(51) International Patent Classification (IPC):
***H01M 50/446*** (2021.01) ***H01M 50/414*** (2021.01)
***H01M 50/431*** (2021.01) ***H01M 10/052*** (2010.01)
***C08L 83/06*** (2006.01) ***C08L 69/00*** (2006.01)
***C08L 27/24*** (2006.01) ***C08L 33/20*** (2006.01)
***C08L 39/06*** (2006.01) ***C08G 77/14*** (2006.01)

(52) Cooperative Patent Classification (CPC):
**C08G 77/14; C08L 27/24; C08L 33/20; C08L 39/06; C08L 69/00; C08L 83/06; H01M 10/052; H01M 50/414; H01M 50/431; H01M 50/446**

(86) International application number:
**PCT/KR2023/016324**

(87) International publication number:
**WO 2024/090904 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022 KR 20220138019**

(71) Applicant: **LG Energy Solution, Ltd.**
**Seoul 07335 (KR)**

(72) Inventors:
- **LEE, Jung Pil**
  **Daejeon 34122 (KR)**
- **MOK, Eunkyung**
  **Daejeon 34122 (KR)**
- **KIM, Jiyoung**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

# (54) SOLID-LIQUID HYBRID ELECTROLYTE MEMBRANE FOR LITHIUM SECONDARY BATTERY

(57) A solid-liquid hybrid electrolyte membrane for a lithium secondary battery includes a liquid polyhedral oligomeric silsesquioxane (POSS), a polymer comprising functional groups compatible with the POSS, and a lithium salt.

[FIG. 1]

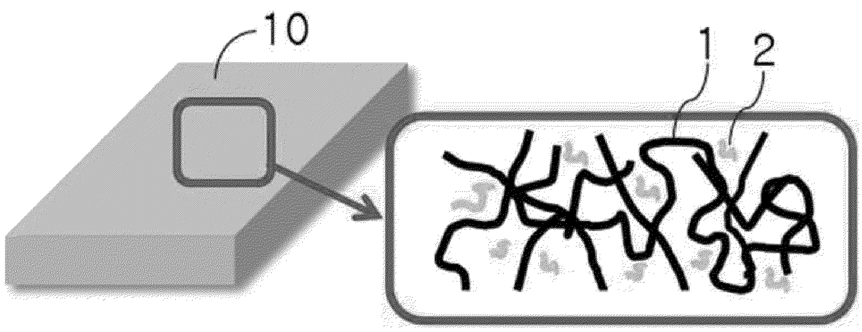


EP 4 432 448 A1

## Description

The present application is a National Phase entry pursuant to 35 U.S.C. § 371 of International Application No. PCT/KR2023/016324 filed on October 20, 2023, and claims priority to and the benefit of Korean Patent Application No. 2022-0138019, filed October 25, 2022.

TECHNICAL FIELD

One aspect of the present disclosure relates to a solid-liquid hybrid electrolyte membrane for lithium secondary batteries.

BACKGROUND ART

Lithium secondary batteries are becoming increasingly important due to their increased use in vehicles, computers, and mobile devices. Among them, there is a particular need to develop lithium secondary batteries that can achieve high energy density with light weight. These lithium secondary batteries consist of a liquid or solid electrolyte with a separating film between the positive electrode and negative electrode.

Lithium-ion rechargeable batteries using liquid electrolyte have a structure in which the negative electrode and positive electrode are compartmentalized by a separating film, and if the separating film is deformed or damaged by an external impact, a short circuit may occur, resulting in leakage and volatilization, overheating, or explosion. Therefore, there is a need to improve the safety of lithium-ion secondary batteries with a conventional liquid electrolyte.

In addition, an all-solid-state battery using a solid electrolyte can increase the stability of the battery and prevent leakage of the electrolyte, which can improve the reliability of the battery. However, solid electrolytes have very low ionic conductivity at room temperature, which reduces the performance of the battery. Therefore, even if a solid electrolyte is used, there is still a need to develop a solid electrolyte film with high energy density and improved processability.

Therefore, there is a need to secure technology for lithium-ion secondary batteries with leak-free solid-liquid hybrids or solid electrolytes instead of conventional liquid electrolytes for ion transfer.

[Patent Literature]

Korean Patent Publication No. 2003-0097009 (December 31, 2003), "Polymer electrolyte with good leakage-resistance and lithium battery employing the same"

SUMMARY OF THE INVENTION

One aspect of the present invention is to address the aforementioned technical challenges and provides a solid-liquid hybrid electrolyte membrane for lithium secondary battery that does not leak and volatilize in normal and elevated pressure environments, has good mechanical strength, has high ionic conductivity, and provides a lithium secondary battery comprising the same with improved performance.

Other objects and advantages of the present invention would be understood in view of the following description, and it would be readily apparent that the objects and advantages of the present invention may be realized by the means or methods and combinations thereof recited in the claims of the present invention.

One aspect of the present invention provides a solid-liquid hybrid electrolyte membrane comprising: a liquid polyhedral oligomeric silsesquioxane (POSS) represented by Formula 1; a polymer comprising functional groups compatible with the POSS; and a lithium salt.

Formula 1

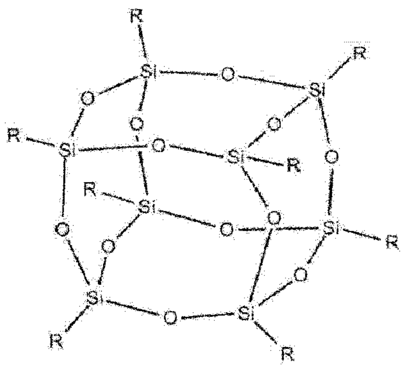

In Formula 1,
R is selected from the group consisting of groups that are the same or different from each other, and each independently represented by the following formulae 1-1 to 1-4:

Formula 1-1

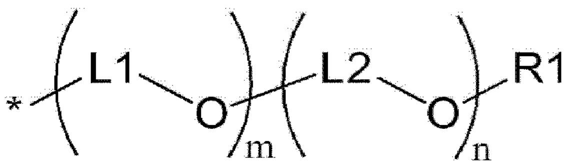

Formula 1-2

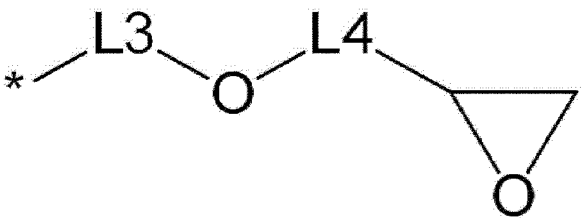

Formula 1-3

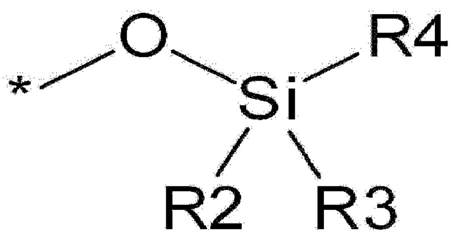

Formula 1-4

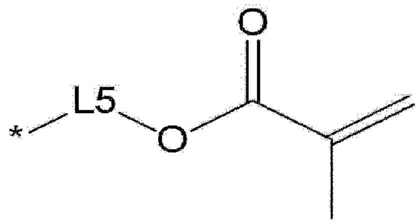

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

In one embodiment of the present invention, in Formulae 1-1 to 1-4, L1 to L5 are an alkylene group having 1 to 10 carbon atoms, R1 to R4 are hydrogen; a hydroxyl group; or an alkyl group having 1 to 30 carbon atoms, and m and n are the same or different from each other, each independently an integer of 0 to 10.

In one embodiment of the present invention, in Formula 1, R is selected from the group consisting of a polyethylene glycol group, a glycidyl group, an octasilane group and a methacrylic group.

In one embodiment of the present invention, in the polymer having the functional groups, the polymer may comprise polypropylene carbonate (PPC), polyvinylidene fluoride (PVDF), polyacrylonitrile (PAN) or polyvinylpyrrolidone (PVP) as a main chain or side chain.

In one embodiment of the present invention, the functional group is selected from the group consisting of trifluoroethylene, tert-butyl acrylate, methyl methacrylate, styrene, vinyl pyridine, acrylic acid, chloride, vinyl acetate, vinyl imidazole, acrylamide, lactide, ethylene oxide, and butyl acrylate.

In one embodiment of the present invention, the lithium salt comprises one or more selected from the group consisting of $LiPF_6$, $LiBF_4$, $LiSbF_6$, $LiAsF_6$, LiOH, $LiOH.H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI, $LiClO_4$ and combinations thereof.

In one embodiment of the present invention, the functional groups compatible with the POSS are present in a content ratio of 1:4 to 1:9.5 of the polymer and the polyhedral oligomeric silsesquioxane.

In one embodiment of the present invention, the content ratio of the liquid polyhedral oligomeric silsesquioxane and the lithium salt is 10:1 to 1:5.

In one embodiment of the present invention, the ionic conductivity of the electrolyte membrane is $8.0 \times 10^{-7}$ to $2.0 \times 10^{-4}$ S/cm at 25°C.

In one embodiment of the present invention, the electrolyte film has a thickness of 1 μm to 200 μm.

Other aspect of the present invention provides a lithium secondary battery comprising a positive electrode; a negative electrode; and a solid-liquid hybrid electrolyte membrane according to the present invention.

A solid-liquid hybrid electrolyte membrane for a lithium secondary battery according to one aspect of the present invention does not leak and volatilize even under normal and pressurized conditions, has high ionic conductivity, and has good stability and mechanical strength.

Furthermore, the lithium secondary battery comprising the solid-liquid hybrid electrolyte membrane for the lithium secondary battery has excellent charge and discharge characteristics, and lifetime characteristics.

## BRIEF DESCRIPTION OF THE DRAWINGS

FIG. 1 is a schematic representation of a solid-liquid phase hybrid electrolyte membrane according to one aspect of the present invention.

## DETAILED DESCRIPTION

The present invention is hereinafter described in detail with reference to the drawings attached hereto in order to facilitate the practice of one of ordinary skill in the art. However, the present invention may be practiced in many

different forms and is not limited to the description herein.

The terms and words used in this specification and claims are not to be construed in their ordinary or dictionary sense but are to be interpreted in a sense and concept consistent with the technical idea of the present invention, based on the principle that the inventor(s) may properly define the concept of a term to best describe his/her invention.

The terms used in the present invention is used to describe specific embodiments only and is not intended to limit the present invention. Singular expressions include plural ones unless the context clearly indicates otherwise. In the present invention, the terms "includes" or "has" and the like indicate the presence of the features, numbers, steps, actions, components, parts or combinations thereof, and do not preclude the possibility of the presence or addition of one or more other features, numbers, steps, actions, components, parts or combinations thereof.

The present invention relates to a solid-liquid hybrid electrolyte membrane, a method of preparing the same, and a lithium secondary battery comprising the same.

A solid-liquid hybrid electrolyte membrane according to one aspect of the present invention comprises a solid polymer and a liquid polyhedral oligomeric silsesquioxane (POSS). The solid-liquid hybrid electrolyte membrane, which comprises a liquid phase, and is in the form of a solid phase, does not leak and volatilize under normal pressure and under conditions of applied pressure. The polymer may comprise functional groups having compatibility with the POSS. The polymer comprising the functional groups may be in the form of a copolymer comprising the functional groups, or may be in the form of a polymer combined with the functional groups. The form of the polymer is not particularly limited as long as the structure comprises the functional groups.

Such solid-liquid hybrid electrolyte membrane may comprise a small amount of liquid polyhedral oligomeric silsesquioxane within the solid polymeric chain structure, may be impregnated with liquid polyhedral oligomeric silsesquioxane within the solid polymeric chain structure, or may be coated with liquid polyhedral oligomeric silsesquioxane on the areas where the solid polymers are in contact or on their surface.

The solid-liquid hybrid electrolyte membrane according to the present invention comprises a solid polymer having a low ionic conductivity, wherein functional groups included in the solid polymer serve to improve the compatibility of the solid polymer with the liquid polyhedral oligomeric silsesquioxane, thereby increasing the content of the liquid polyhedral oligomeric silsesquioxane, thereby obtaining improved ionic conductivity compared to a conventional solid electrolyte membrane, and at the same time having a free-standing mechanical strength.

FIG. 1 is a schematic illustration of the structure of a solid-liquid hybrid electrolyte membrane according to one aspect of the present invention. Hereinafter, the present invention will be described in more detail with reference to the drawings.

Referring to FIG. 1, a solid-liquid hybrid electrolyte membrane (10) according to one aspect of the present invention comprises a solid polymer (1) and a small amount of liquid polyhedral oligomeric silsesquioxane (2). The solid polymer (1) comprises functional groups having high compatibility with the liquid polyhedral oligomeric silsesquioxane (2).

The solid polymer (1) is a solid at room temperature and is a polymeric material with low solubility in electrolyte.

The liquid polyhedral oligomeric silsesquioxane (2) is a liquid at room temperature. When the liquid polyhedral oligomeric silsesquioxane is thermally cured, it can undergo polymerization and become a solid. According to the present invention, a solid-liquid hybrid electrolyte membrane can be prepared by mixing the solid polymer and the liquid polyhedral oligomeric silsesquioxane in a certain ratio. More detailed description is provided below.

A solid-liquid hybrid electrolyte membrane according to one aspect of the present invention may comprise a liquid polyhedral oligomeric silsesquioxane (POSS) represented by Formula 1 below; a polymer comprising a functional group having compatibility with the POSS; and a lithium salt:

Formula 1

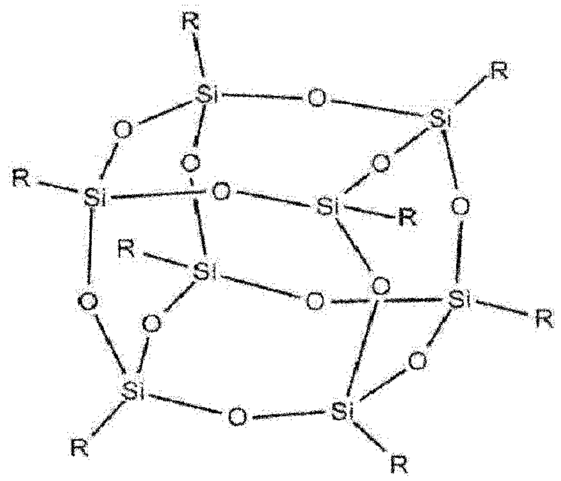

In Formula 1,
according to other embodiment of the present invention, R is selected from the group consisting of groups that are the same or different from each other, and each independently represented by the following formulae 1-1 to 1-4:

Formula 1-1

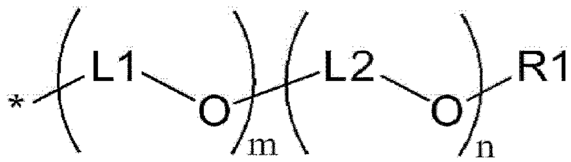

Formula 1-2

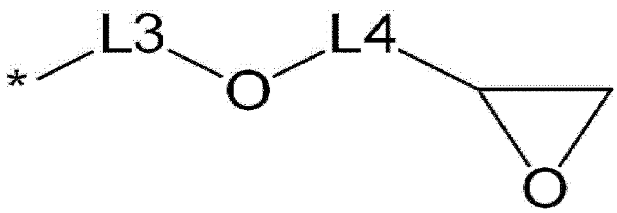

Formula 1-3

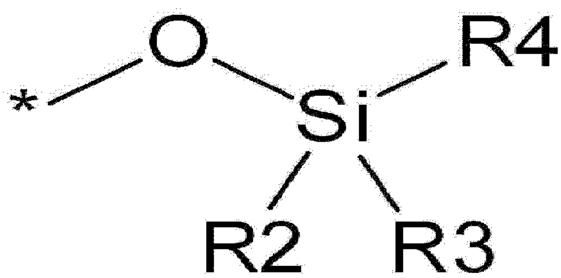

Formula 1-4

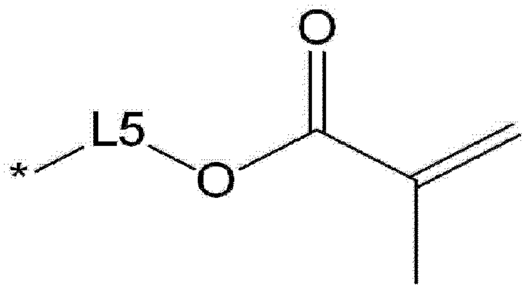

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

The polyhedral oligomeric silsesquioxane (POSS) has a variety of structures, such as a random structure, a ladder structure, a cage structure, and a partial cage structure. Among them, the polyhedral oligomeric silsesquioxane included in the solid-liquid hybrid electrolyte membrane according to the present invention is a silica cage structure with a diameter of about 1 nm to 5 nm, depending on the cage size, which is an organic-inorganic complex with the properties of both inorganic silica ($SiO_2$) and organic silicon ($R_2SiO$). The polyhedral oligomeric silsesquioxane can reduce the void space in the electrolyte to form a more solid and dense structure, thereby increasing the mechanical properties and mechanical strength.

The inventors have found that mixing a solid polymer having a low ionic conductivity with a liquid polyhedral oligomeric silsesquioxane represented by the following Formula 1 can improve the ionic conductivity. By mixing the solid polymer of the present invention with the liquid polyhedral oligomeric silsesquioxane, the ionic conductivity is improved because the polyhedral oligomeric silsesquioxane is located between the polymer chains, and the movement of the polymer chains is facilitated, thereby facilitating the mobility of lithium ions. In addition, since the solid polymer contains functional groups that have good compatibility with the POSS, the content of POSS in the solid electrolyte can be further increased. A liquid polyhedral oligomeric silsesquioxane represented by Formula 1 is as follows:

Formula 1

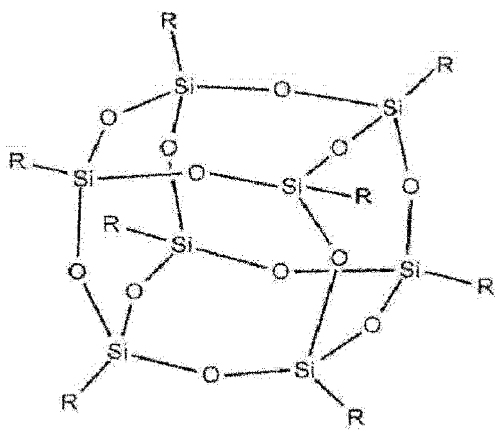

In Formula 1,
R is selected from the group consisting of groups that are the same or different from each other, and each independently represented by the following formulae 1-1 to 1-4:

Formula 1-1

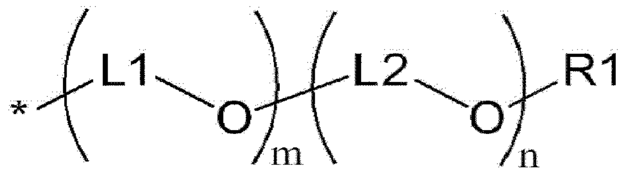

Formula 1-2

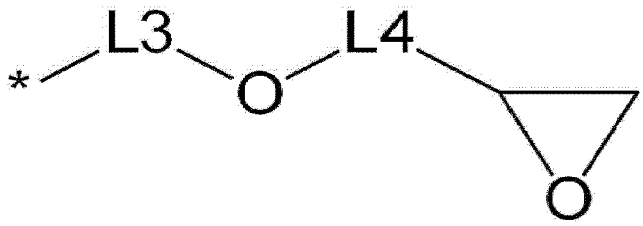

Formula 1-3

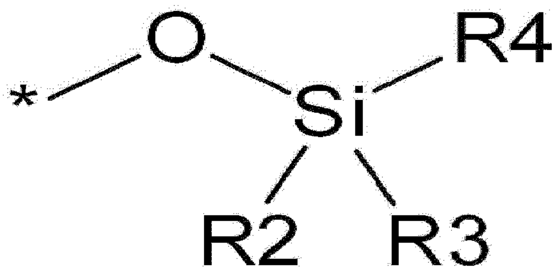

Formula 1-4

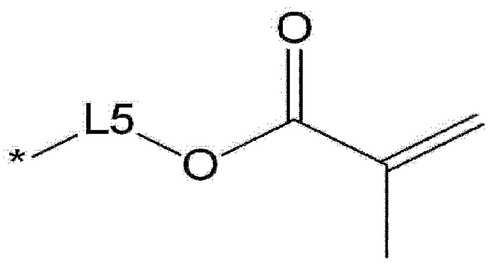

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

In Formula 1, R may have one or more functional groups capable of binding lithium ions.
In one embodiment of the present invention, R may be a group represented by Formula 1-1. In Formula 1-1, L1 and L2 may be an alkylene group having 1 to 30 carbon groups, preferably an alkylene group having 1 to 20 carbon atoms, and more preferably an alkylene group having 1 to 10 carbon atoms. In Formula 1-1, R1 may be hydrogen, an alkyl group having 1 to 30 carbon atoms, an alkenyl group having 2 to 30 carbon atoms, an alkynyl group having 2 to

30 carbon atoms, an alkoxy group having 1 to 30 carbon atoms or a carboxyl group having 1 to 30 carbon atoms, preferably an alkyl group having 1 to 20 carbon atoms, an alkenyl group having 2 to 20 carbon atoms, an alkynyl group having 2 to 20 carbon atoms, an alkoxy group having 1 to 20 carbon atoms, or a carboxyl group having 1 to 20 carbon atoms, and more preferably an alkyl group having 1 to 10 carbon atoms, an alkenyl group having 2 to 10 carbon atoms, an alkynyl group having 2 to 10 carbon atoms, an alkoxy group having 1 to 10 carbon atoms, or a carboxyl group having 1 to 10 carbon atoms.

In other embodiment of the present invention, R may be a group represented by Formula 1-2. In Formula 1-2, L3 and L4 may be an alkylenic group having 1 to 30 carbon atoms, preferably an alkylenic group having 1 to 20 carbon atoms, and more preferably an alkylenic group having 1 to 10 carbon atoms.

In other embodiment of the present invention, R may be a group represented by Formula 1-3. In Formula 1-3, R2 to R4 may be the same or different, each independently, hydrogen, a hydroxyl group, an alkyl group having 1 to 30 carbon atoms, an alkenyl group having 2 to 30 carbon atoms, an alkynyl group having 2 to 30 carbon atoms, or an alkoxy group having 1 to 30 carbon atoms, preferably hydrogen, a hydroxyl group, an alkyl group having 1 to 20 carbon atoms, an alkenyl group having 2 to 20 carbon atoms, an alkynyl group having 2 to 20 carbon atoms, or an alkoxy group having 1 to 20 carbon atoms, and more preferably hydrogen, a hydroxyl group, an alkyl group having 1 to 10 carbon atoms, an alkenyl group having 2 to 10 carbon atoms, an alkynyl group having 2 to 10 carbon atoms, or an alkoxy group having 1 to 10 carbon atoms.

In other embodiment of the present invention, R may be a group represented by Formula 1-4. In Formula 1-4, L5 may be an alkylene group having 1 to 30 carbon atoms, preferably an alkylene group having 1 to 20 carbon atoms, and more preferably an alkylene group having 1 to 10 carbon atoms.

For example, in Formula 1, R may be selected from the group consisting of a polyethylene glycol group, a glycidyl group, an octacylane group, and a methacrylic group, and R may be, but is not limited to:

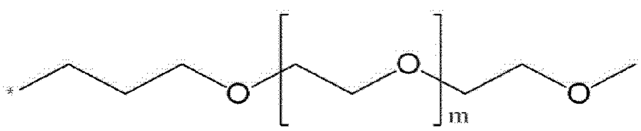

(wherein m is an integer of 1 to 9),

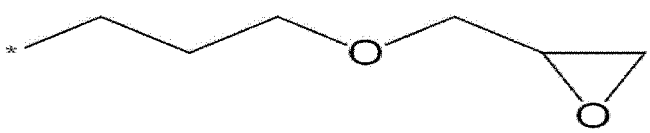
,
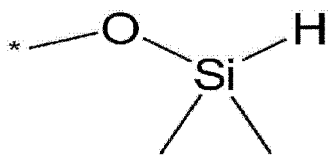
,

or

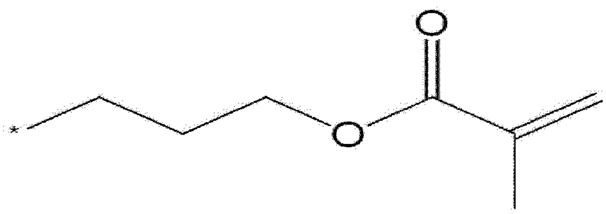

(wherein * is the bonding position).

In one embodiment of the present invention, the solid polymer comprising functional groups that are compatible with the POSS may be a polymer that does not undergo phase separation when mixed with the liquid polyhedral oligomeric silsesquioxane. The polymer may be a solid polymer that is miscible with each other, i.e., has compatibility with the liquid POSS and has a high potential for coexistence when mixed with the liquid polyhedral oligomeric silsesquioxane in an appropriate ratio.

Specifically, the polymer may comprise polypropylene carbonate (PPC), polyvinylidene fluoride (PVDF), polyacrylonitrile (PAN) or polyvinylpyrrolidone (PVP) as main or side chains.

Furthermore, the functional group may be selected from the group consisting of trifluoroethylene, tert-butyl acrylate, methyl methacrylate, styrene, vinyl pyridine, acrylic acid, chloride, vinyl acetate, vinyl imidazole, acrylamide, lactide, ethylene oxide, and butyl acrylate. The functional group may further improve the compatibility between the

polymer and the liquid POSS, which may increase the content of the liquid POSS, which in turn may improve the ionic conductivity and strength.

In one embodiment of the present invention, a solid-liquid hybrid electrolyte membrane comprising the polymer and a liquid polyhedral oligomeric silsesquioxane represented by Formula 1 may further comprise a lithium salt.

The lithium salt may serve as a source of lithium ions in the battery, enabling operation of a basic lithium secondary battery, and may serve to facilitate the transfer of lithium ions between the positive electrode and the negative electrode. The lithium salt may be one selected from the group consisting of, but not limited to, $LiPF_6$, $LiBF_4$, $LiSbF_6$, $LiAsF_6$, LiOH, $LiOH.H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI, $LiClO_4$, and combinations thereof.

The content of the lithium salt may be comprised in an amount of 10 to 50% by weight, preferably 15 to 45% by weight, more preferably 20 to 40% by weight, based on 100% by weight of the total electrolyte film. If it is included in an amount of less than 10% by weight, the ionic conductivity of the electrolyte membrane may be reduced due to the low content. If it is included in an amount of more than 50% by weight, all the lithium salts in the electrolyte membrane may not be able to dissociate and exist in a crystalline state, which does not contribute to the ionic conductivity but rather acts as a hindrance to the ionic conductivity, which may reduce the ionic conductivity and the mechanical strength of the solid-liquid hybrid electrolyte membrane may be weakened due to the relatively reduced content of polymer, so it is appropriately adjusted in the above range.

The liquid polyhedral oligomeric silsesquioxane and lithium salt may be present in an amount of more than 80% by weight, more than 83% by weight, more than 85% by weight, more than 88% by weight, or more than 90% by weight, based on the total weight of the electrolyte membrane, to further enhance the ionic conductivity. The upper limit for the content of the liquid polyhedral oligomeric silsesquioxane and lithium salt is not particularly limited, but may be, for example, less than 93% by weight, less than 94% by weight, or less than 95% by weight. If the upper limit is over the above ranges, they may be phase separated during mixing and/or after filtration, may not exist as a solid phase, may exist as a liquid phase, or may leak.

In one embodiment of the present invention, the functional group compatible with the POSS has a content ratio of the polymer comprised therein to the liquid polyhedral oligomeric silsesquioxane of 1:4 to 1:9.5, or 1:6 to 1:9.5, or 1:8 to 1:9.5, or 1: 8.5 to 9.5, or 1:9 to 1:9.5. Due to the functional group compatible with the POSS, even if the content of liquid polyhedral oligomeric silsesquioxane is increased, phase separation does not occur and a solid film can be formed, and the ionic conductivity can be improved.

In one embodiment of the present invention, the content ratio of the liquid polyhedral oligomeric silsesquioxane to the lithium salt may be 10:1 to 1:5, preferably 10:1 to 1:3, preferably 10:1 to 1:2, preferably 10:1 to 1:1, and more preferably 10:1 to 2:1. When the content ratio of the liquid polyhedral oligomeric silsesquioxane to the lithium salt is less than 10:1 to 1:5, the amount of lithium ions is small, and the ionic conductivity is reduced; when the content ratio is greater than 10:1 to 1:2, the amount of lithium ions is excessive, and dissociation does not occur, precipitation occurs, or viscosity increases, and the ionic conductivity is reduced.

In one embodiment of the present invention, the ionic conductivity of the solid-liquid hybrid electrolyte membrane may be $8.0 \times 10^{-7}$ to $2.0 \times 10^{-4}$ S/cm.

In one embodiment of the present invention, the electrical resistivity of the solid-liquid hybrid electrolyte membrane may be 10.0 to 60,000 ohm ($\Omega$), and preferably 50.0 to 55,000 ohm ($\Omega$).

In the solid-liquid hybrid electrolyte membrane, the electrical resistivity of the electrolyte membrane may increase as the content of liquid polyhedral oligomeric silsesquioxane relative to the polymer increases, and the ionic conductivity of the electrolyte membrane may increase.

In one embodiment of the present invention, the thickness of the solid-liquid hybrid electrolyte film may be 1 $\mu$m to 200 $\mu$m, preferably 5 $\mu$m to 195 $\mu$m. If the thickness of the solid-liquid hybrid electrolyte film is less than 1 $\mu$m, the mechanical strength of the electrolyte film may be weak, which may cause difficulties in assembling the battery or cause an electrical short circuit. Furthermore, if the thickness of the solid-liquid hybrid electrolyte film is greater than 200 $\mu$m, the energy density decreases and the ionic conductivity decreases, making it difficult to apply to a battery.

In one embodiment of the present invention, a lithium secondary battery comprising a positive electrode, a negative electrode, and a separating film interposed between the positive electrode and the negative electrode, wherein the separating film may comprise a solid-liquid hybrid electrolyte membrane according to the present invention.

In the positive electrode and the negative electrode, an electrode active material layer is formed on the current collector or at least one surface of the current collector, wherein the active material layer comprises a plurality of electrode active material particles and a solid electrolyte. Further, the electrode may further comprise one or more of a conductive material and a binder resin, as desired. Further, the electrode may further comprise various additives for the purpose of complementing or improving the physicochemical properties of the electrode.

In the present invention, for the negative electrode active material, any material that can be used as a negative electrode active material in a lithium-ion secondary battery can be used. The negative electrode active material may include one or two or more selected from, for example, carbon such as anthracite or graphitized carbon; metal complex

oxides such as $Li_xFe_2O_3$ (wherein 0≤x≤1), $Li_xWO_2$ (wherein 0≤x≤1), or $Sn_xMe_{1-x}Me'_yO_z$ (wherein Me is Mn, Fe, Pb or Ge; Me' is Al, B, P or Si, Group 1, 2 or 3 elements of the periodic table, or halogen; 0<x≤1; 1≤y≤3; and 1≤z≤8); lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ or $Bi_2O_5$; conductive polymers such as polyacetylene; Li-Co-Ni based materials; titanium oxides; and lithium titanates. In a specific embodiment of the present invention, the negative electrode active material may comprise a carbon-based material and/or Si.

For the positive electrode, the electrode active material can be any material that can be used as a positive electrode active material in a lithium-ion secondary battery. For example, the positive electrode active material may include, but is not limited to, a layered compound such as lithium nickel oxide ($LiNiO_2$) or a compound substituted with one or more transition metals; a lithium manganese oxide represented by formula $Li_{1+x}Mn_{2-x}O_4$ (wherein x is 0 to 0.33), $LiMnO_3$, $LiMn_2O_3$ or $LiMnO_2$; lithium copper oxides ($Li_2CuO_2$); vanadium oxides, such as LiVsOs, $LiV_3O_4$, $V_2O_5$ or $Cu_2V_2O_7$; Ni site-type lithium nickel represented by $LiNi_{1-x}M_xO_2$ (wherein M is Co, Mn, Al, Cu, Fe, Mg, B or Ga, and x is 0.01 to 0.3); lithium manganese complex oxides represented by formula $LiMn_{2-x}M_xO_2$ (wherein M is Co, Ni, Fe, Cr, Zn or Ta, and x is 0.01 to 0.1) or $Li_2Mn_3MO_8$ (wherein M is Fe, Co, Ni, Cu or Zn); lithium manganese complex oxides with spinel structure represented by $LiNi_xMn_{2-x}O_4$; $LiMn_2O_4$, wherein a portion of the Li is substituted by an alkaline earth metal ion; disulfide compounds; and $Fe_2(MoO_4)_3$.

In the present invention, the current collector is a material with electrical conductivity, such as a metal plate, and any suitable one can be used according to the polarity of the current collector electrode known in the field of secondary batteries.

In the present invention, the conductive material is intended to impart conductivity to the electrode and is typically added in an amount of 1 to 30% by weight, based on the total weight of the mixture including the electrode active material. Such a conductive material is not particularly limited as long as it is conductive without causing any chemical changes in the battery, and may include one or two or more mixtures selected from, for example, graphite such as natural or artificial graphite; carbon black such as carbon black, acetylene black, ketjen black, channel black, furnace black, lamp black or summer black; conductive fibers such as carbon fibers or metal fibers; metal powders such as carbon fluoride, aluminum or nickel powder; conductive whiskers such as zinc oxide or potassium titanate; conductive metal oxides such as titanium oxide; or conductive materials such as polyphenylene derivatives.

In the present invention, the binder resin serves to adhere the negative electrode active material particles well to each other and also to adhere the negative electrode active material well to the current collector, and is not particularly limited to any component that assists in the bonding of the active material and the conductive material and the bonding to the current collector, for example, polyvinylidene fluoride polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, fluorinated rubber, or various copolymers. The binder resin may typically be included in an amount of 1 to 30% by weight, or 1 to 10% by weight, based on 100% by weight of the electrode layer.

In the present invention, the electrode active material layer may include one or more additives such as oxidation stable additives, reduction stable additives, flame retardants, heat stabilizers, or antifogging agents, as needed.

Hereinafter, embodiments are presented to describe the present invention in detail. However, the following embodiments are intended to illustrate the present invention, and the scope of the present invention is not limited thereto.

## EXAMPLES

### [Embodiment 1]

Solution A was prepared by adding 10% by weight of fluorinated polyvinylidene fluoride (PVDF) containing poly(vinyl pyridine) (PVP) (PVP-PVDF, Polymersources) as the polymer to N-methyl-2-pyrrolidone (NMP) and stirring thoroughly at 60 °C.

Polyethylene glycol-POLYHEDRAL OLIGOMERIC SILSESQUIOXANES (PEG-POSS, Hybridplastics) and lithium bis(trifluoromethanesulfonyl)imide (LiTFSI) (Sigma-Aldrich) were sufficiently stirred in a weight ratio of 10:4 at 60 °C to prepare solution B.

The solutions A and B were stirred sufficiently for 24 hours at room temperature to obtain a content ratio of PVP-PVDF to PEG-POSS-LiTFSI of 15:85.

The prepared solution was coated on Stainless Steel Foil (SUS foil) with a doctor blade and vacuum dried at 100 °C for 12 hours, and then a solid electrolyte film was prepared.

### [Embodiment 2]

The solid electrolyte membrane was prepared by the same method as that of Embodiment 1, except that the

content ratio of PVP-PVDF to PEG-POSS-LiTFSI was 10:90.

**[Embodiment 3]**

The solid electrolyte film was prepared by the same method as that of Embodiment 1, except that the content ratio of PVP-PVDF to PEG-POSS-LiTFSI was 7:93.

**[Embodiment 4]**

The solid electrolyte membrane was prepared in the same way as in Embodiment 1, except that polyvinyl pyrrolidone (PVP) containing polyvinyl acetate (PVAc) (PVAc-PVP, polyvinyl pyrrolidone-co-vinyl acetate, Polymersource) was used instead of fluorinated polyvinylidene (PVP-PVDF) containing polyvinyl pyridine as the polymer.

**[Comparative Example 1]**

The solid electrolyte membrane was prepared by the same method as that of Embodiment 1, except that PVDF (Sigma-Aldrich) without functional groups was used as the polymer and the content ratio of PVDF to PEG-POSS-LiTFSI was 20:80.

**[Comparative Example 2]**

The solid electrolyte membrane was prepared by the same method as that of Embodiment 1, except that PVDF without functional groups was used as the polymer and the content ratio of PVDF to PEG-POSS-LiTFSI was 15:85.

**[Comparative Example 3]**

The solid electrolyte membrane was prepared by the same method as that of Embodiment 1, except that the content ratio of PVP-PVDF to PEG-POSS-LiTFSI was 5:95.

**[Comparative Example 4]**

The solid electrolyte film was prepared by the same method as that of Embodiment 1, except that the content ratio of PVP-PVDF to PEG-POSS-LiTFSI was 20:80.

**[Comparative Example 5].**

The solid electrolyte membrane was prepared by the same method as that of Embodiment 1, except that polyvinyl pyrrolidone (PVP, Polymersource) was used instead of fluorinated polyvinylidene containing polyvinyl pyridine (PVP-PVDF) and the content ratio of PVP to PEG-POSS-LiTFSI was 33:67.

**[Comparative Example 6]**

The solid electrolyte membrane was prepared by the same method as that of Embodiment 1, except that polyvinyl pyrrolidone (PVP, Polymersource) was used instead of fluorinated polyvinylidene containing polyvinyl pyridine (PVP-PVDF) and the content ratio of PVP to PEG-POSS-LiTFSI was 15:85.

**Experimental Example 1: Ion conductivity at room pressure in a solid-liquid hybrid electrolyte membrane**

Using the analytical device VMP3 (BioLogic science instrument), the electrochemical impedance was measured at 23 °C with an amplitude of 10 mV and a scan range of 500 KHz to 20 MHz, and based on this, the ionic conductivity was calculated using the following Formula 1:

$$\sigma = \frac{l}{Ra}$$

Equation 1

In Equation 1, σ is the ionic conductivity, l is the thickness of the membrane, R is the resistance, and a is the area.

The ionic conductivities obtained using Equation 1 are shown in Table 1 below.

Table 1

| | Composition | Membrane Status | Thickness (μm) | Resistance (R, ohm) | Ionic Conductivity (S/cm) |
|---|---|---|---|---|---|
| Embodiment 1 | PVP-PVDF: PEG-POSS-LiTFSI = 15:85 | Solid membrane | 39 | 19 | 1.02.E-04 |
| Embodiment 2 | PVP-PVDF: PEG-POSS-LiTFSI = 10:90 | Solid membrane | 31 | 10.0 | 1.54.E-04 |
| Embodiment 3 | PVP-PVDF: PEG-POSS-LiTFSI = 7:93 | Solid membrane | 35 | 10 | 1.74.E-04 |
| Embodiment 4 | PVAc-PVP: PEG-POSS-LiTFSI = 15:85 | Solid membrane | 43 | 2500.0 | 8.56.E-07 |
| Comparative Example 1 | PVDF: PEG-POSS-LiTFSI = 20:80 | Solid membrane | 96 | 54.0 | 8.85.E-05 |
| Comparative Example 2 | PVDF: PEG-POSS-LiTFSI = 15:85 | Phase separation | - | - | - |
| Comparative Example 3 | PVP-PVDF: PEG-POSS-LiTFSI = 5:95 | Liquid membrane | - | - | - |
| Comparative Example 4 | PVP-PVDF: PEG-POSS-LiTFSI = 20:80 | Solid membrane | 21 | 115 | 9.09.E-06 |
| Comparative Example 5 | PVP: PEG-POSS-LiTFSI = 33:67 | Solid membrane | 70 | 9000.0 | 3.88.E-07 |
| Comparative Example 6 | PVP: PEG-POSS-LiTFSI = 15:85 | Phase separation | - | - | - |

As a result, it was confirmed that an electrolyte membrane comprising a polymer comprising a functional group compatible with POSS, and a polymer comprising POSS and a functional group compatible with the POSS in a certain content ratio, as shown in Table 1, was formed in the form of a solid membrane, and the ionic conductivity was improved.

Comparative Examples 2 and 6 show that phase separation occurs when PVDF and PVP, which do not contain functional groups compatible with POSS as polymers, are used but the content of POSS is increased, or when PVP does not contain functional groups compatible with POSS.

[Reference numerals]

10: Solid-liquid hybrid electrolyte membrane
1: Solid polymer
2: Liquid polyhedral oligomeric silsesquioxane

## Claims

**1.** A solid-liquid hybrid electrolyte membrane comprising: a liquid polyhedral oligomeric silsesquioxane (POSS) represented by Formula 1 below; a polymer comprising functional groups compatible with the POSS; and a lithium salt:

Formula 1

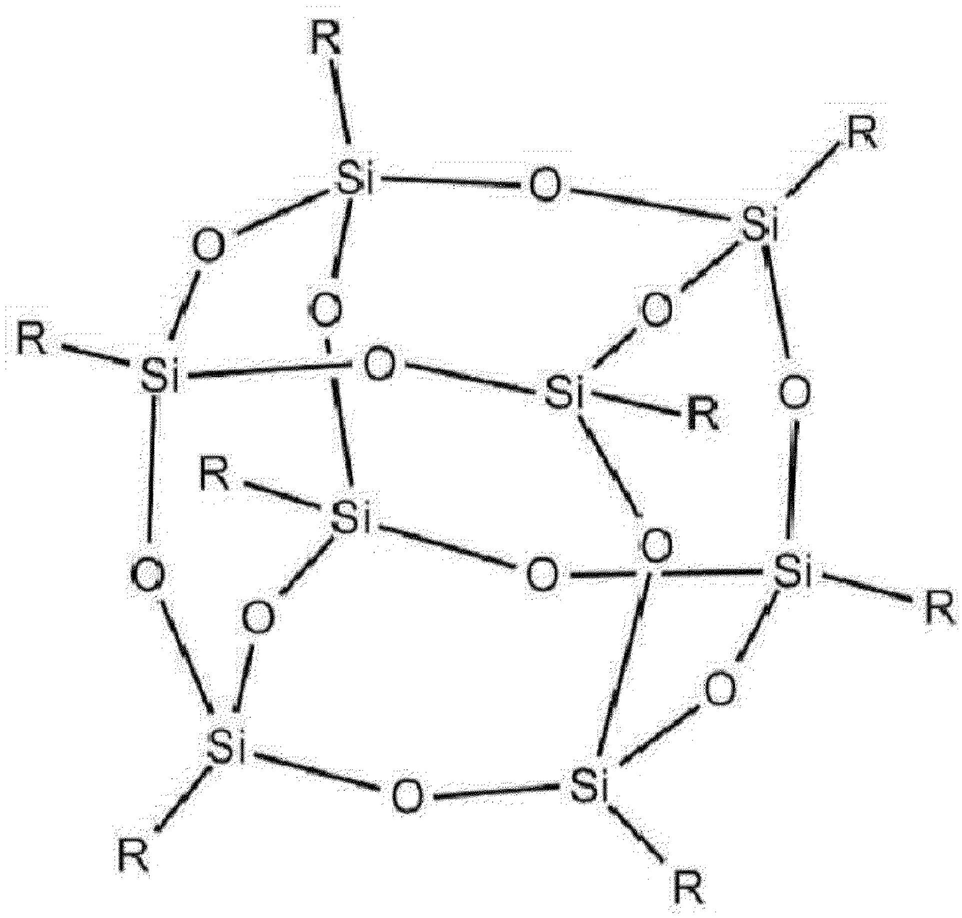

wherein in Formula 1,
R is selected from the group consisting of groups that are the same or different from each other, and each independently represented by the following formulae 1-1 to 1-4:

Formula 1-1

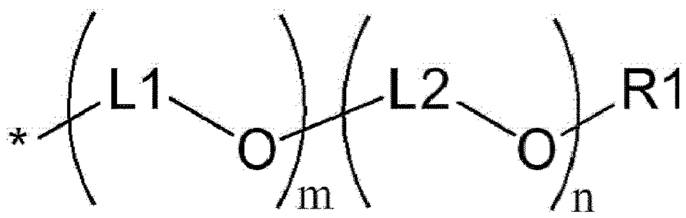

Formula 1-2

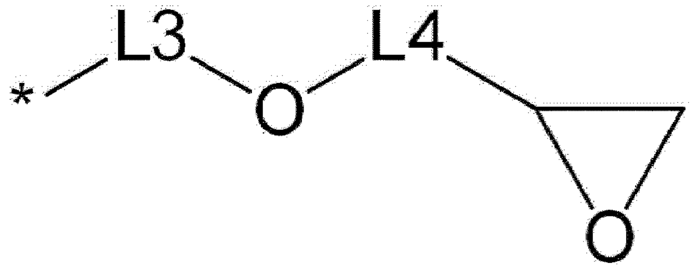

Formula 1-3

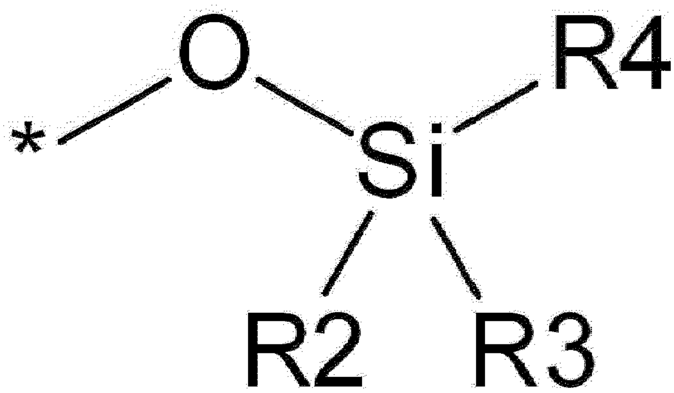

Formula 1-4

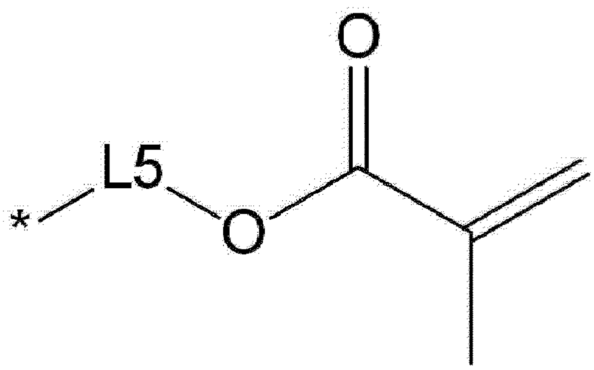

where in Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
* is the bonding position.

**2.** The solid-liquid hybrid electrolyte membrane according to claim 1,

wherein in Formulae 1-1 to 1-4,
L1 to L5 are an alkylene group having 1 to 10 carbon atoms,
R1 to R4 is hydrogen; a hydroxyl group; or an alkyl group having 1 to 30 carbon atoms, and

m and n are equal to or different from each other, and each is an integer of 0 to 10 independently.

3. The solid-liquid hybrid electrolyte membrane according to claim 1, wherein in Formula I, R is selected from the group consisting of polyethylene glycol groups, glycidyl groups, octasilane groups, and methacrylic groups.

4. The solid-liquid hybrid electrolyte membrane according to claim 1, wherein the polymer having functional groups comprises polypropylene carbonate (PPC), polyvinylidene fluoride (PVDF), polyacrylonitrile (PAN), or polyvinylpyrrolidone (PVP) as a main chain or side chain.

5. The solid-liquid hybrid electrolyte membrane according to claim 1, wherein the functional group compatible with the POSS is selected from the group consisting of trifluoroethylene, tert-butyl acrylate, methyl methacrylate, styrene, vinyl pyridine, acrylic acid, chloride, vinyl acetate, vinyl imidazole, acrylamide, lactide, ethylene oxide, and butyl acrylate.

6. The solid-liquid hybrid electrolyte membrane according to claim 1, wherein the lithium salt comprises one or more selected from the group consisting of $LiPF_6$, $LiBF_4$, $LiSbF_6$, $LiAsF_6$, LiOH, $LiOH.H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI, $LiClO_4$ and combinations thereof.

7. The solid-liquid hybrid electrolyte membrane according to claim 1, wherein the functional group compatible with the POSS has a content ratio of polymer contained therein to polyhedral oligomeric silsesquioxane of 1:4 to 1:9.5.

8. The solid-liquid hybrid electrolyte membrane according to claim 1, wherein the content ratio of the liquid polyhedral oligomeric silsesquioxane to the lithium salts is 10:1 to 1:5.

9. The solid-liquid hybrid electrolyte membrane according to claim 1, wherein the ionic conductivity of the electrolyte membrane is between $8.0 \times 10^{-1}$ and $2.0 \times 10^{-4}$ S/cm at 25°C.

10. The solid-liquid hybrid electrolyte membrane according to claim 1, wherein the electrolyte film has a thickness of 1 $\mu$m to 200 $\mu$m.

11. A lithium secondary battery, comprising a positive electrode;

negative electrode; and
solid-liquid hybrid electrolyte membrane according to claim 1 .

[FIG. 1]

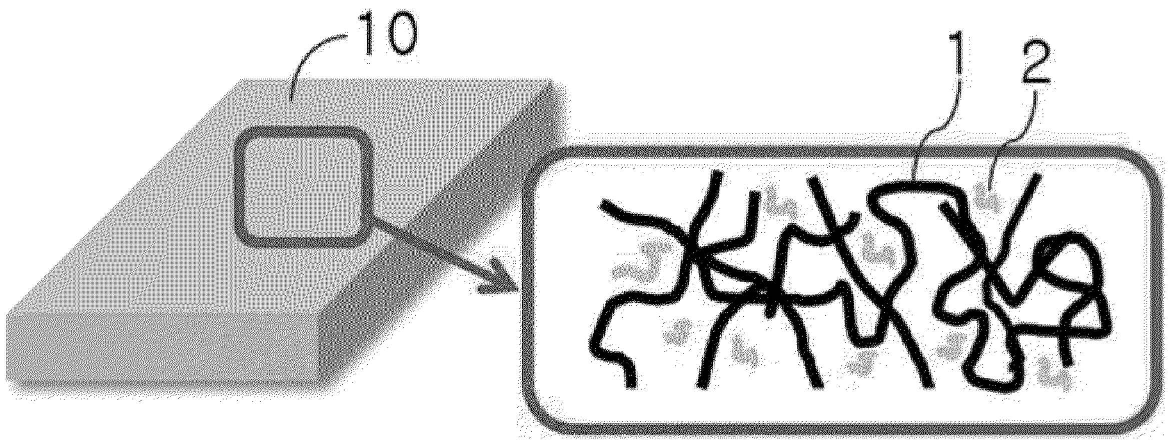

**INTERNATIONAL SEARCH REPORT**

International application No.
**PCT/KR2023/016324**

**A. CLASSIFICATION OF SUBJECT MATTER**

**H01M 50/446**(2021.01)i; **H01M 50/414**(2021.01)i; **H01M 50/431**(2021.01)i; **H01M 10/052**(2010.01)i; **C08L 83/06**(2006.01)i; **C08L 69/00**(2006.01)i; **C08L 27/24**(2006.01)i; **C08L 33/20**(2006.01)i; **C08L 39/06**(2006.01)i; **C08G 77/14**(2006.01)i

According to International Patent Classification (IPC) or to both national classification and IPC

**B. FIELDS SEARCHED**

Minimum documentation searched (classification system followed by classification symbols)

H01M 50/446(2021.01); C08L 101/12(2006.01); C08L 71/02(2006.01); H01M 10/052(2010.01); H01M 10/0565(2010.01); H01M 10/0568(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 고상-액상 하이브리드(solid-liquid state hybrid), 전해질막 (electrolyte membrane), 고분자(polymer), 폴리헤드랄 올리고머형 실세스퀴옥산(polyhedral oligomeric silsesquioxane), 관능기(functional group), 상용성(compatibility), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| X<br>Y | POLU, A. R. et al. Effect of POSS-PEG hybrid nanoparticles on cycling performance of polyether-LiDFOB based solid polymer electrolytes for all solid-state Li-ion battery applications. Journal of Industrial and Engineering Chemistry. 2017, vol. 45, pp. 68-77.<br>See Preparation of nanocomposite solid polymer electrolyte membranes section; SEM and TEM analysis section and Battery test section; figure 1; and table 1. | 1-3,5,7-11<br>4,6 |
| Y | KR 10-2015-0101235 A (SOGANG UNIVERSITY RESEARCH & BUSINESS DEVELOPMENT FOUNDATION) 03 September 2015 (2015-09-03)<br>See claims 1, 4, 7 and 8. | 4,6 |
| A | WO 2017-030811 A1 (DREXEL UNIVERSITY) 23 February 2017 (2017-02-23)<br>See entire document. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **02 February 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
**PCT/KR2023/016324**

**C. DOCUMENTS CONSIDERED TO BE RELEVANT**

| Category* | Citation of document, with indication, where appropriate, of the relevant passages | Relevant to claim No. |
|---|---|---|
| A | CN 109065947 A (NORTHWESTERN POLYTECHNICAL UNIVERSITY) 21 December 2018 (2018-12-21)<br>See entire document. | 1-11 |
| A | KR 10-2012-0109173 A (KUMOH NATIONAL INSTITUTE OF TECHNOLOGY INDUSTRY-ACADEMIC COOPERATION FOUNDATION et al.) 08 October 2012 (2012-10-08)<br>See entire document. | 1-11 |

Form PCT/ISA/210 (second sheet) (July 2022)

**INTERNATIONAL SEARCH REPORT**
**Information on patent family members**

International application No.
**PCT/KR2023/016324**

| Patent document cited in search report | Publication date (day/month/year) | Patent family member(s) | Publication date (day/month/year) |
|---|---|---|---|
| KR 10-2015-0101235 A | 03 September 2015 | KR 10-1613511 B1 | 19 April 2016 |
| | | US 2015-0244025 A1 | 27 August 2015 |
| | | US 9680181 B2 | 13 June 2017 |
| WO 2017-030811 A1 | 23 February 2017 | US 10622671 B2 | 14 April 2020 |
| | | US 2018-0226679 A1 | 09 August 2018 |
| CN 109065947 A | 21 December 2018 | CN 109065947 B | 12 May 2020 |
| KR 10-2012-0109173 A | 08 October 2012 | KR 10-1247596 B1 | 05 April 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 2023016324 W
- KR 20220138019
- KR 20030097009